# FASCICULE DE BREVET EUROPEEN

(11) **EP 0 737 356 B1**
(45) Date de publication et mention de la délivrance du brevet: **11.03.1998**
(21) Numéro de dépôt: 95905682.1
(22) Date de dépôt: 28.12.1994
(51) Int. Cl.: G21C 3/334

(54) **ASSEMBLAGE COMBUSTIBLE DEMONTABLE D'UN REACTEUR NUCLEAIRE REFROIDI PAR DE L'EAU LEGERE**
ZERLEGBARES BRENNSTABBÜNDEL EINES LEICHTWASSERGEKÜHLTEN KERNREAKTORS
DETACHABLE FUEL ASSEMBLY FOR A LIGHT WATER COOLED NUCLEAR REACTOR

(30) Priorité: 30.12.1993 FR 9315935
(43) Date de publication de la demande: 16.10.1996
(73) Titulaire: FRAMATOME, 92400 Courbevoie (FR); COGEMA, F-78141 Velizy Villacoublay (FR)
(72) Inventeur: LEROUX, Jean-Claude, F-69100 Villeurbanne (FR); BURFIN, Pascal, F-69290 Saint-Genis-les-Ollières (FR)
(74) Mandataire: Bouget, Lucien
(86) Numéro de dépôt international: FR9401548
(87) Numéro de publication internationale: WO9518451

(56) Documents cités:
- EP-A- 0 073 728
- FR-A- 2 341 917
- US-A- 5 268 948

## Description

L'invention concerne un assemblage combustible démontable d'un réacteur nucléaire refroidi par de l'eau légère et en particulier un assemblage combustible démontable d'un réacteur refroidi par de l'eau sous pression.

Les réacteurs nucléaires refroidis par de l'eau et en particulier les réacteurs nucléaires à eau sous pression comportent des assemblages constitués par un faisceau de crayons combustibles de grande longueur disposés parallèlement les uns aux autres et maintenus dans une ossature formée par des tubes-guides, des entretoises et deux embouts d'extrémité. Les tubes-guides sont disposés dans la direction longitudinale de l'assemblage et sont reliés à des entretoises transversales régulièrement espacées suivant la longueur de l'assemblage.

Les tubes-guides sont également reliés à chacune de leurs extrémités, à l'un ou à l'autre de deux embouts constituant des pièces de rigidification et de fermeture de l'assemblage.

Les crayons combustibles de l'assemblage constituent un faisceau dans lequel les crayons sont parallèles entre eux et disposés dans les sections transversales de l'assemblage, suivant un réseau régulier déterminé par les entretoises. Certaines positions du faisceau sont occupées par des tubes-guides qui sont généralement reliés de manière rigide aux entretoises.

Les tubes-guides ont une longueur supérieure à la longueur des crayons combustibles et sont placés dans le faisceau de manière à comporter une partie saillante par rapport au faisceau de crayons combustibles à chacune de leurs extrémités. Les embouts sont fixés sur ces parties saillantes d'extrémité des tubes-guides de manière à assurer la fermeture de l'assemblage à chacune de ses extrémités.

Les crayons combustibles sont constitués par des pastilles frittées en matériau combustible nucléaire empilées à l'intérieur d'une gaine métallique isolant les pastilles du fluide entourant l'assemblage combustible. Dans le cas d'une rupture de gaine d'un crayon d'un assemblage combustible, il est nécessaire de remplacer très rapidement ce crayon pour éviter les fuites de produit radio-actif dans le fluide de refroidissement du réacteur. Pour accéder aux crayons combustibles et effectuer leur remplacement, il est nécessaire de démonter l'un des embouts de l'assemblage, ce qui suppose de supprimer les liaisons entre les parties d'extrémité des tubes-guides et l'embout.

Les embouts comportent une plaque transversale appelée plaque-adaptatrice comportant des trous traversants reproduisant le réseau des tubes-guides dans chacun desquels est engagé et fixé un tube-guide.

De façon à pouvoir remplacer les crayons défectueux dans les assemblages combustibles, on a conçu et mis au point de nouveaux assemblages combustibles comportant des tubes-guides dont la liaison avec l'un au moins des embouts d'extrémité est démontable.

Pour effectuer le remplacement des crayons combustibles défectueux, l'assemblage est placé sous eau en position verticale, dans une piscine telle qu'une piscine de stockage ; l'assemblage repose sur le fond de la piscine par l'un de ses embouts ou embout inférieur. L'autre embout ou embout supérieur est accessible sous une certaine hauteur d'eau depuis le dessus de la piscine.

Dans un type d'assemblage combustible démontable connu, les parties des tubes-guides engagées dans l'embout supérieur de l'assemblage comportent une partie expansible radialement qui peut être par exemple une douille fendue rapportée à l'extrémité du tube-guide. Un manchon de blocage introduit à l'intérieur du tube-guide réalise l'expansion radiale de la douille fendue et l'accrochage du tube-guide dont une partie en saillie radiale vient se loger à l'intérieur d'une cavité usinée dans l'embout.

Un tel dispositif nécessite de réaliser un formage spécial de l'extrémité du tube-guide qui vient s'engager à l'intérieur de la plaque adaptatrice de l'embout.

En outre, la mise en place et l'extraction des manchons de blocage des tubes-guides, lors du montage ou du démontage de l'assemblage combustible, nécessitent des outillages spéciaux permettant d'exercer une traction ou une poussée sur le manchon de blocage et le démontage et l'enlèvement des manchons de blocage entraînant la formation de déchets radio-actifs.

On a également proposé des assemblages combustibles comportant des moyens de liaison qui peuvent être manoeuvrés de manière rapide en faisant tourner un élément de blocage d'une fraction de tour, pour verrouiller ou déverrouiller la liaison entre un tirant de maintien de l'assemblage et l'embout démontable.

De tels dispositifs qui sont décrits par exemple dans les US-A-4.064.004 et US-A-5.268.948 présentent une structure complexe et de nombreuses pièces.

En outre, ces dispositifs nécessitent que le tube-guide soit saillant au-dessus de la plaque adaptatrice de l'embout et comportent des parties en saillie au-dessus de la plaque adaptatrice fixées sur l'extrémité du tube-guide ayant une hauteur notable et incompatible avec l'utilisation de grappes de poison consommable qui comportent une plaque d'appui venant dans une disposition superposée par rapport à la plaque adaptatrice de l'assemblage combustible, lorsque les crayons de poison consommable sont introduits dans les tubes-guides de l'assemblage combustible.

Le dispositif selon le US-A-5.268.948 peut comporter un manchon fixé sur le tube-guide et venant en appui sous la plaque adaptatrice de l'embout et deux pièces également montées sur l'extrémité du tube-guide de manière à être mobiles en rotation l'une par rapport à l'autre autour de l'axe du tube-guide. L'une de ces pièces est une bague montée mobile en rotation sur le tube-guide et comportant deux parties en saillie radiale. La plaque adaptatrice de l'embout est traversée sur toute son épaisseur par une ouverture de section constante dont la forme correspond à la forme de la section transversale de la bague. La bague doit être montée sur l'extrémité du tube-guide en saillie en dehors de l'ouverture de la plaque et on doit prévoir une seconde pièce fixée à l'extrémité du tube-guide pour assurer le blocage de la bague en position de verrouillage ou en position de déverrouillage du tube-guide. Le dispositif de fixation du tube-guide est donc situé en grande partie à l'extérieur de l'embout, au-dessus de la plaque adaptatrice.

Le but de l'invention est donc de proposer un assemblage combustible d'un réacteur nucléaire refroidi par de l'eau légère comportant un faisceau de crayons combustibles parallèles maintenus dans une ossature formée par des tubes-guides ou tirants pleins, des entretoises et des embouts d'extrémité fixés sur les extrémités des tubes-guides ou tirants, l'un au moins des embouts étant fixé sur l'une des extrémités de chacun des tubes-guides ou tirants, de manière démontable, par l'intermédiaire d'une partie d'extrémité du tube-guide qui est engagée dans une ouverture traversant une plaque transversale de l'embout appelée plaque adaptatrice et associée à des moyens de fixation démontables rapides du tube-guide comportant un manchon d'appui solidaire de l'extrémité du tube-guide comportant au moins un rebord d'appui destiné à venir en contact avec une face de la plaque adaptatrice à la périphérie de l'ouverture, et une bague montée dans une disposition coaxiale autour du manchon, de manière à pouvoir être déplacée en rotation autour du manchon, comportant au moins deux butées d'appui en saillie radiale séparées par au moins deux passages de direction axiale et au moins une partie à déformation élastique dans la direction radiale, ces moyens de fixation étant placés à l'intérieur de la plaque adaptatrice, de telle sorte que l'extrémité du tube-guide peut être affleurante sur la face externe de l'embout.

Dans ce but, l'ouverture de l'embout présente au moins deux butées d'appui en saillie vers l'intérieur séparées par au moins deux passages de direction axiale et comportant une surface d'appui des butées de la bague perpendiculaire à l'axe de l'ouverture, à l'intérieur de l'ouverture,
- l'un au moins des deux éléments : ouverture de l'embout et manchon d'appui comportant des ouvertures radiales de réception de la partie à déformation élastique de la bague, pour le blocage de la bague soit dans une position de verrouillage du manchon d'appui à l'intérieur de l'ouverture de la plaque adaptatrice, soit dans une position de déverrouillage,
- et le manchon d'appui, lorsqu'il ne comporte pas d'ouverture de réception pour le blocage de la bague, comprenant au moins deux butées d'appui séparées par au moins deux passages de direction axiale.

Afin de bien faire comprendre l'invention, on va maintenant décrire, à titre d'exemple non limitatif, en se référant aux figures jointes en annexe, un assemblage combustible suivant l'invention comportant des moyens de fixation rapide des tubes-guides sur la plaque adaptatrice d'un embout.

La figure 1 est une vue en élévation d'un assemblage combustible d'un réacteur nucléaire à eau sous pression.

La figure 2 est une vue en élévation de l'ossature de l'assemblage représenté sur la figure 1.

La figure 3 est une vue en élévation avec coupe partielle de l'embout supérieur de l'assemblage combustible.

La figure 4 est une vue de dessus suivant 4 de l'embout supérieur représenté sur la figure 3.

Les figures 5, 6 et 7 sont relatives à un premier mode de réalisation des moyens de fixation rapide d'un tube-guide d'un assemblage combustible suivant l'invention.

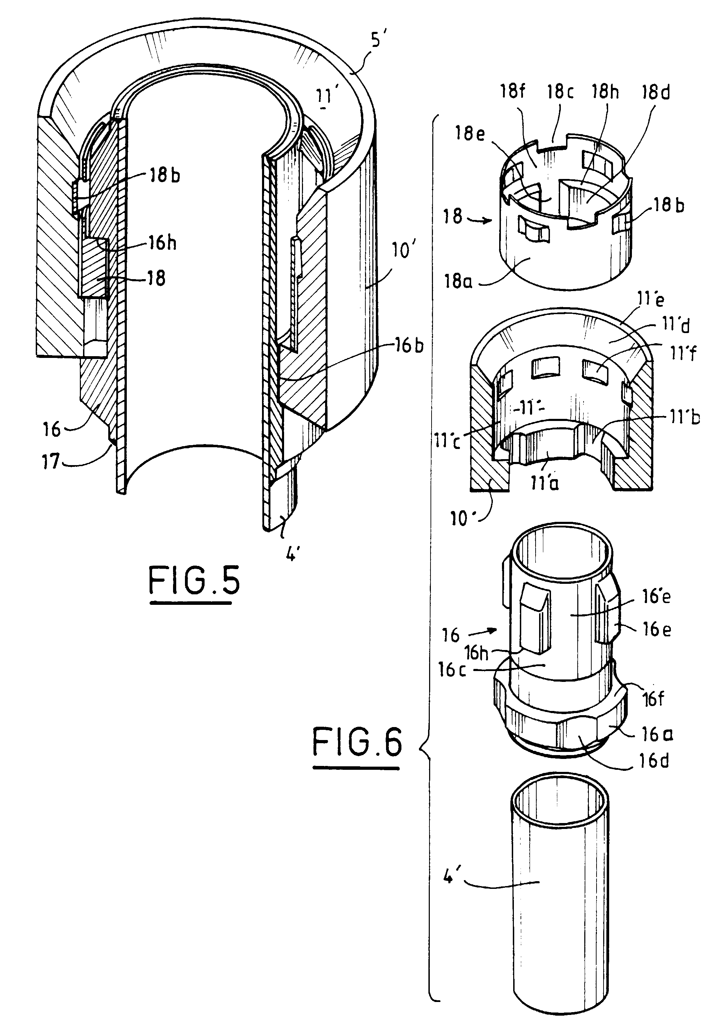

La figure 5 est une vue en perspective et en coupe partielle de la partie d'extrémité d'un tube-guide engagée et fixée dans la plaque adaptatrice de l'assemblage combustible par les moyens de fixation selon le premier mode de réalisation.

La figure 6 est une vue en perspective éclatée des moyens de fixation du tube-guide représenté sur la figure 5, dans un état non assemblé.

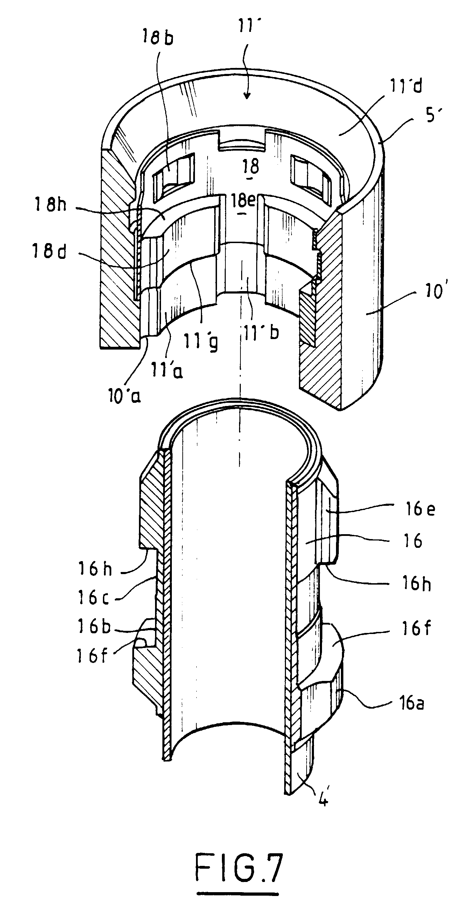

La figure 7 est une vue en perspective éclatée avec arrachement de la partie d'extrémité d'un tube-guide et des moyens de fixation du tube-guide selon le premier mode de réalisation, dans un état assemblé, le tube-guide étant dans une position non fixée à l'intérieur de l'ouverture de la plaque adaptatrice d'un embout.

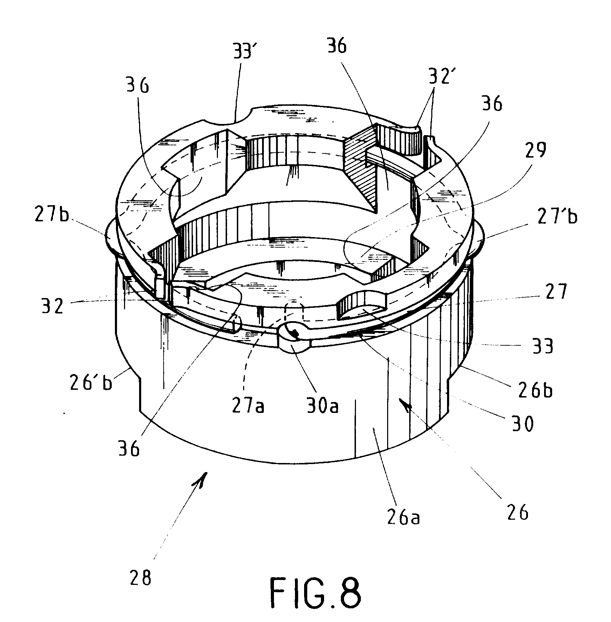

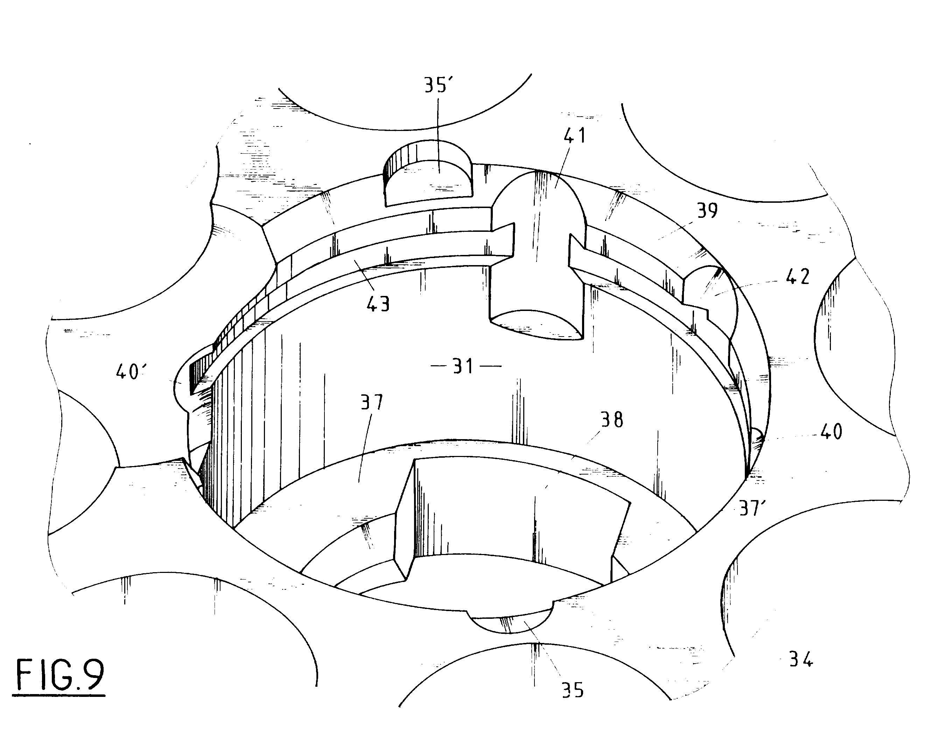

Les figures 8 et 9 sont relatives à une variante du premier mode de réalisation.

La figure 8 est une vue en perspective d'une bague selon la variante.

La figure 9 est une vue en perspective de l'ouverture de l'embout selon la variante.

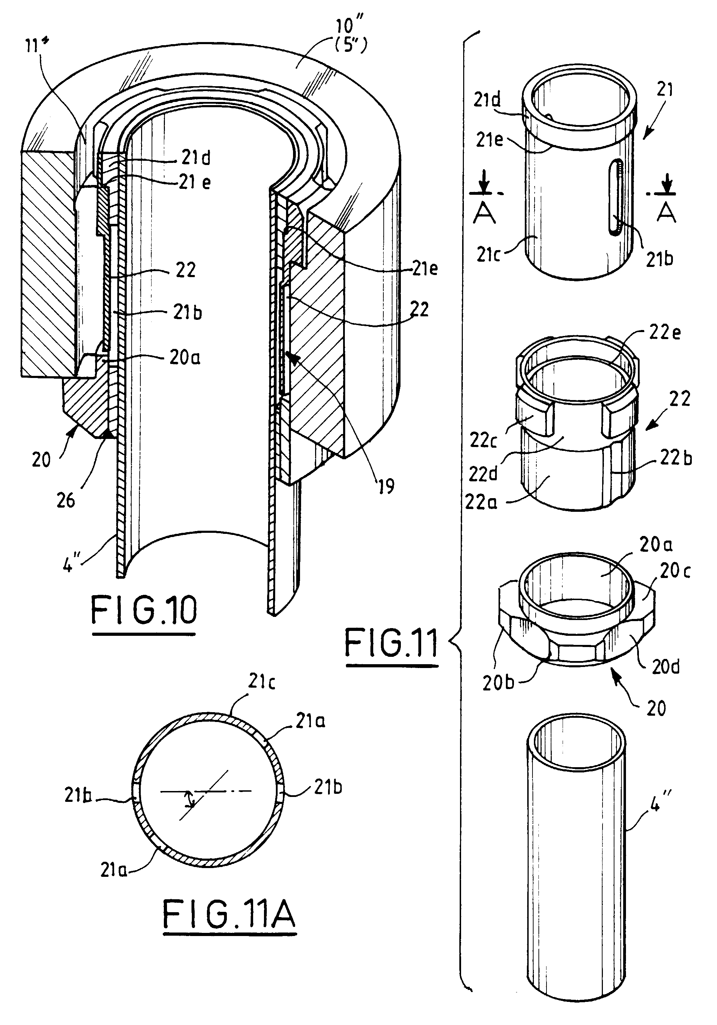

Les figures 10, 11 et 12 sont relatives à un second mode de réalisation des moyens de fixation d'un tube-guide à l'intérieur d'une ouverture de la plaque adaptatrice de l'embout d'un assemblage combustible suivant l'invention.

La figure 10 est une vue en perspective avec arrachement de l'extrémité du tube-guide engagée et fixée par les moyens de fixation selon le second mode de réalisation à l'intérieur de l'ouverture de la plaque adaptatrice de l'embout.

La figure 11 est une vue en perspective éclatée des moyens de fixation selon le second mode de réalisation, dans un état non assemblé.

La figure 11A est une vue en coupe transversale suivant A-A de la figure 11, du manchon d'appui du tube-guide.

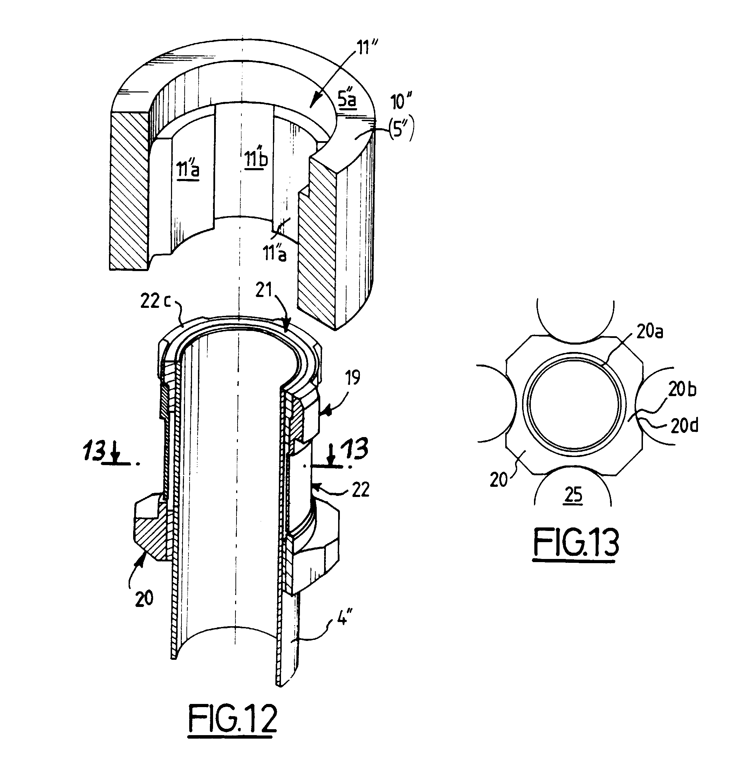

La figure 12 est une vue en perspective éclatée avec arrachement de la partie d'extrémité du tube-guide et des moyens de fixation selon le second mode de réalisation dans un état assemblé, le tube-guide étant dans une position non engagée à l'intérieur de l'ouverture de la plaque adaptatrice de l'embout.

La figure 13 est une vue en coupe transversale suivant 13-13 de la figure 12 d'une partie des moyens de fixation du tube-guide intercalés entre des crayons combustibles de l'assemblage selon l'invention.

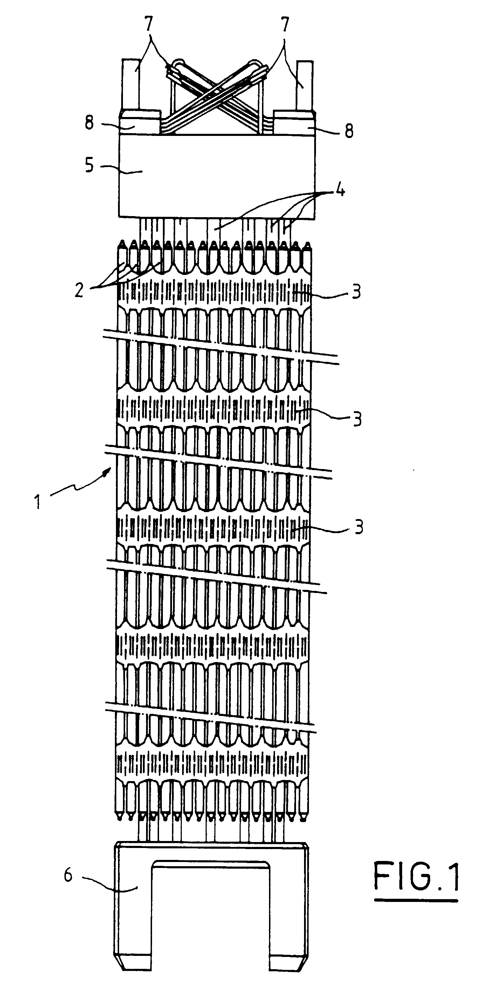

Sur la figure 1, on voit un assemblage combustible désigné de manière générale par le repère 1 et constitué par un faisceau de crayons combustibles parallèles 2 maintenus par des entretoises 3 disposées avec un certain espacement suivant la longueur des crayons 2. Les entretoises 3 sont constituées par des grilles dont les cellules reçoivent chacune un crayon combustible. Certaines positions dans le réseau des grilles sont occupées par des tubes-guides 4 dont la longueur est supérieure à la longueur des crayons combustibles 2.

Les tubes-guides 4 sont reliés à l'une de leurs extrémités à un embout 5 constituant l'embout supérieur de l'assemblage combustible et à leur autre extrémité à un second embout constituant l'embout inférieur.

Lorsque l'assemblage est en position de stockage sous eau dans une piscine, l'embout supérieur 5 est accessible depuis le dessus de la piscine. Cet embout supérieur 5 porte des ressorts à lame 7 assurant le maintien de l'assemblage dans le coeur du réacteur dont la plaque supérieure de coeur vient reposer sur les ressorts 7. L'embout comporte également des plots 8 saillants par rapport à sa face supérieure.

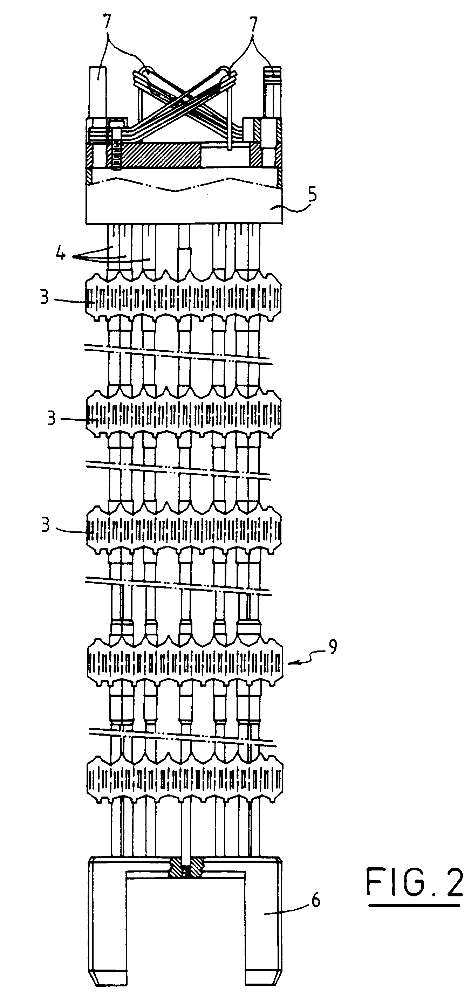

Sur la figure 2, on a représenté l'ossature 9 de l'assemblage combustible comportant les tubes-guides 4, des entretoises 3 et les embouts d'extrémité 5 et 6. Cette ossature 9 sert de logement aux crayons combustibles 2 du faisceau qui peuvent être introduits ou extraits de l'ossature, lorsque l'embout supérieur 5 est enlevé. Pour effectuer le remplacement ou le prélèvement de crayons, on prévoit des liaisons démontables rapides entre l'extrémité des tubes-guides 4 et l'embout supérieur 5.

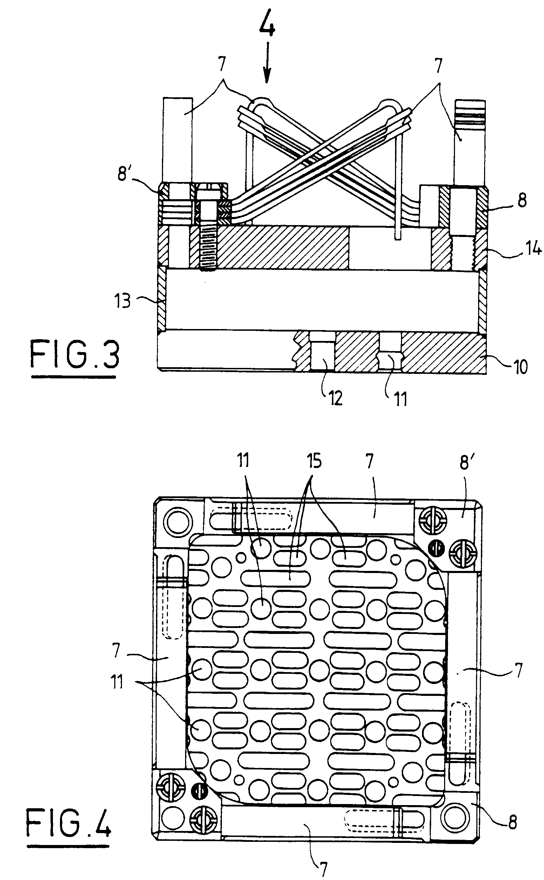

Sur les figures 3 et 4, on voit un embout supérieur d'un assemblage combustible comportant une plaque adaptatrice 10 dans laquelle viennent s'engager les tubes-guides, à l'intérieur d'ouvertures 11 traversant cette plaque adaptatrice et accessibles depuis la partie supérieure de l'assemblage combustible.

Le tube-guide d'instrumentation de l'assemblage combustible situé en partie centrale est reçu dans une ouverture 12 de forme particulière. L'embout supérieur de l'assemblage est constitué par la plaque adaptatrice et par un cadre 14 reliés entre eux par l'intermédiaire d'une jupe 13 soudée sur la plaque 10 et sur le cadre 14. Le cadre 14 porte les bossages 8 comportant les ouvertures de centrage et les brides 8' de maintien des ressorts 7.

Comme il est visible sur la figure 4, les trous de passage 11 permettant la fixation des tubes-guides 4 sont placés dans des positions définies correspondant aux positions des vingt-quatre tubes-guides de l'assemblage. Des trous de passage d'eau 15 traversent la plaque adaptatrice 10 de l'embout entre les ouvertures traversantes 11 des tubes-guides.

Sur les figures 5, 6 et 7, on a représenté un premier mode de réalisation des moyens de fixation de la partie d'extrémité 4' d'un tube-guide de l'assemblage combustible représenté sur la figure 1, à l'intérieur d'une ouverture 11' traversant la plaque adaptatrice 10' d'un embout démontable d'un assemblage combustible selon l'invention.

Sur la figure 5, les moyens de fixation ont été représentés dans leur position assemblée, le tube-guide étant engagé et fixé à l'intérieur de la plaque adaptatrice 10' de l'embout.

Sur la figure 6, les moyens de fixation ont été représentés de manière séparée dans leur position d'assemblage.

Sur la figure 7, les éléments de fixation ont été représentés dans leur position assemblée à l'extrémité du tube-guide et à l'intérieur de l'ouverture de la plaque adaptatrice, le tube-guide étant dans une position désengagée par rapport à l'ouverture de la plaque adaptatrice.

Les moyens de fixation comportent un manchon d'appui 16 l'ouverture 11' de la plaque adaptatrice 10' et une bague de verrouillage et de déverrouillage 18.

L'extrémité du tube-guide 4' ne comporte aucun usinage ni aucun formage particulier.

Le manchon d'appui 16 comporte, à l'une de ses extrémités, une collerette 16a ayant une surface supérieure d'appui plane 16f destinée à constituer un rebord d'appui venant en contact avec une face inférieure plane d'appui 10'a de la plaque adaptatrice 10', autour de l'ouverture 11'.

La collerette 16a du manchon d'appui 16 comporte d'autre part quatre embrèvements 16d régulièrement répartis autour de la collerette 16a destinés à permettre le passage de crayons combustibles de l'assemblage, lors de leur extraction ou de leur remise en place dans l'assemblage, après démontage de l'embout supérieur 5'.

Au-dessus du rebord d'appui 16f de la collerette 16a, le manchon 16 comporte une partie cylindrique lisse 16b puis une partie cylindrique lisse 16c, le diamètre de la partie cylindrique 16c étant légèrement inférieur au diamètre de la partie lisse 16b.

La partie cylindrique 16b constitue une portée d'appui sur une partie cylindrique de centrage et de positionnement correspondante de l'ouverture 11' de la plaque adaptatrice 10'.

Le manchon d'appui 16 comporte de plus des butées 16e en saillie radiale vers l'extérieur par rapport à la surface cylindrique 16c régulièrement réparties sur la périphérie de la virole 16c du manchon d'appui 16 et séparées par des passages de direction axiale 16'e entre deux butées 16e successives.

Dans le mode de réalisation représenté sur les figures 5 à 7, le manchon d'appui 16 comporte quatre butées 16e disposées à 90° autour de l'axe du manchon.

De manière plus générale, le manchon d'appui 16 comporte au moins deux butées en saillie telles que 16e séparées par au moins deux passages axiaux tels que 16'e entre deux butées successives qui s'étendent longitudinalement sur une certaine longueur de la virole 16c du manchon 16.

En-dessous de la collerette 16a, le manchon 16 comporte un rebord en saillie vers le bas par l'intermédiaire duquel le manchon 16 peut être fixé par une soudure 17 ou par d'autres moyens de fixation sur l'extrémité du tube 4' engagée à l'intérieur de l'alésage du manchon sur toute la hauteur du manchon.

L'alésage intérieur du manchon 16 présente un diamètre légèrement supérieur au diamètre extérieur du tube-guide 4', de manière que le manchon 16 puisse être glissé sur l'extrémité du tube 4' en position d'assemblage tel que représenté sur les figures 5 et 7.

L'ouverture 11' de la plaque adaptatrice 10' est usinée pour constituer, dans sa partie inférieure, quatre butées d'appui 11'a disposées à 90° autour de l'axe de l'ouverture 11', usinées sur une partie seulement de l'ouverture 11 et séparées par des passages axiaux 11'b dont la largeur dans la direction circonférentielle est très légèrement supérieure à la largeur des butées 16e du manchon d'appui 16, de manière à permettre un engagement dans la direction axiale de l'extrémité du tube-guide 4' sur laquelle est fixé le manchon d'appui 16, à l'intérieur de l'ouverture 11', jusqu'à la mise en appui du rebord 16f de la collerette 16a du manchon 16 sur la surface inférieure plane 10'a de la plaque adaptatrice.

Le nombre, la dimension et la disposition des butées en saillie permettent d'engager axialement le manchon d'appui 16 solidaire de l'extrémité du tube-guide 4', à l'intérieur de l'ouverture de la plaque adaptatrice. La forme et la largeur des passages axiaux 11'b de l'ouverture 11' correspondent sensiblement à la forme et la largeur des butées 16e du manchon et la forme et la dimension des butées 11'a de l'ouverture 11' correspondent sensiblement à la forme et à la largeur des passages axiaux 16'e du manchon 16. Les butées 11'a comportent des surfaces d'appui perpendiculaires à l'axe de l'ouverture, à l'intérieur de l'ouverture 11.

La plaque adaptatrice 10' est d'autre part usinée, à l'intérieur de l'ouverture 11', au-dessus de surfaces d'appui des butées ll'a, dans une partie cylindrique lisse ll'c de l'ouverture 11', pour constituer huit cavités 11'f de direction radiale disposées à 45° l'une de l'autre autour de l'axe de l'ouverture 11' et donc deux ensembles de quatre cavités disposées à 90° l'une de l'autre.

Au-dessus des cavités 11'f, l'ouverture 11' présente une partie tronconique 11'd évasée vers l'extérieur et débouchant à l'extrémité supérieure de l'ouverture 11'.

La bague de verrouillage 18 est constituée sous la forme d'une virole cylindrique 18a dont le diamètre extérieur est légèrement inférieur au diamètre intérieur de l'ouverture 11' dans sa partie cylindrique 11'c.

La bague 18 comporte quatre butées 18d en saillie radiale vers l'intérieur de la virole cylindrique constituant la partie courante 18f de la bague de guidage 18 séparées par des passages axiaux 18e.

La dimension des butées en saillie 18d dans la direction circonférentielle correspond à la dimension dans la direction circonférentielle des butées 11'a usinées à l'intérieur de l'ouverture 11'.

La virole de la bague 18 comporte de plus des parties 18b sous forme de bossettes élastiques pouvant se déformer élastiquement dans des directions radiales.

La section des bossettes 18b correspond à la section des cavités 11'f de l'ouverture 11', de manière que les bossettes 18b déformables radialement et en saillie radiale vers l'extérieur de la virole de la bague 18 puissent venir se loger dans des cavités 11'f, lorsque la bague 18 est engagée à l'intérieur de la partie cylindrique 11'c de l'ouverture 11', au-dessus des butées 11'a, comme représenté sur les figures 5 et 7.

La virole cylindrique de la bague 18 présente un diamètre très légèrement inférieur au diamètre intérieur de la partie cylindrique lisse 11'c de l'ouverture 11'. Dans le mode de réalisation représenté sur les figures 5 à 7, la bague 18 comporte quatre bossettes déformables élastiquement 18b disposées à 90° les unes des autres autour de l'axe de la bague 18.

La bague 18 comporte de plus à sa partie supérieure quatre ouvertures 18c en forme de créneaux qui sont réparties à 90° autour de l'axe de la bague 18 et disposées chacune sensiblement à égale distance entre deux bossettes déformables élastiquement 18b.

Pour assurer le montage et la fixation de l'extrémité d'un tube-guide 4' dans une ouverture 11' de la plaque adaptatrice 10', dans un premier temps, les moyens de fixation du tube-guide 4' sont assemblés comme représenté sur la figure 7. Le manchon d'appui 16 est fixé et soudé sur l'extrémité du tube-guide et la bague 18 est engagée à l'intérieur de la partie cylindrique lisse 11'c de l'ouverture 11' de la plaque adaptatrice 10'. La bague 18 est orientée de manière que les butées 18d de la bague 18 viennent dans des positions parfaitement superposées par rapport aux butées 11'a de l'ouverture 11' ; simultanément, bien entendu, les passages axiaux 11'b entre les butées 11'a et les passages axiaux 18e entre les butées 18d de la bague 18 se trouvent dans des positions parfaitement alignées. Dans cette position, les languettes élastiques 18b viennent s'engager dans une première série de quatre cavités 11'f disposées à 90° les unes des autres autour de l'axe de l'ouverture 11'.

Il est à remarquer que la partie d'extrémité de la bague 18 comportant des créneaux 18c est accessible par le dessus de la plaque adaptatrice 10' du fait de la présence de la partie d'extrémité évasée 11'd de l'ouverture 11'. On peut introduire, à l'intérieur de la partie d'extrémité évasée 11'd de l'ouverture 11', un outil comportant des ergots susceptibles de venir s'engager dans les créneaux 18c de la bague 18. L'outil permet alors de faire tourner la bague 18 autour de son axe confondu avec l'axe de l'ouverture 11' dans laquelle la bague 18 est montée avec un léger jeu radial.

Les butées 11'a de l'ouverture 11' et les butées 18d de la bague 18 qui ont des formes identiques présentent une surface intérieure cylindrique ayant pour axe l'axe de la bague et l'axe de l'ouverture qui sont confondus dans la position d'engagement de la bague 18 dans l'ouverture 11' telle que représentée sur les figures 5 et 7.

La surface cylindrique interne des butées 11'a et 18d présente un diamètre légèrement supérieur au diamètre de la partie cylindrique 16c du manchon d'appui 16 et sensiblement égal au diamètre de la partie cylindrique 16b du manchon d'appui 16, de sorte que dans la position d'engagement du manchon à l'intérieur de l'ouverture 11' comme représenté sur la figure 5, la surface cylindrique 16b du manchon 16 se trouve en contact parfait avec la surface intérieure des butées 11'a qui assurent un parfait centrage du manchon d'appui 16 et du tube 4' à l'intérieur de l'ouverture 11'.

D'autre part, la distance dans la direction axiale entre le rebord d'appui 16f et le rebord inférieur 16h des butées d'appui 16e du manchon d'appui 16 est légèrement supérieure à la somme des dimensions dans la direction axiale des butées d'appui 11'a et 18d placées en position superposée dans la direction axiale, lors de la mise en place de la bague 18, comme représentée sur la figure 7.

Pour réaliser le montage et la fixation de l'embout sur l'extrémité du tube-guide 4' équipé du manchon 16, comme représenté sur la figure 7, l'embout comportant la plaque adaptatrice 10' est engagé sur l'extrémité du tube-guide 4' par son ouverture 11' orientée de manière telle que les butées d'appui 16e du manchon d'appui soient introduites par glissement axial dans les passages axiaux 11'b et 18e qui se trouvent dans l'alignement l'un de l'autre.

La plaque adaptatrice 10' est engagée sur l'extrémité du tube-guide 4', jusqu'au moment où le rebord d'appui 16f vient en contact avec la surface inférieure des butées 11'a constituant la surface inférieure 10'a de la plaque adaptatrice, à la périphérie de l'ouverture 11'.

Du fait de l'écartement des rebords 16f et 16h, le rebord inférieur 16h des butées d'appui 16e du manchon se trouve alors légèrement au-dessus de la surface supérieure 18h des butées d'appui 18d de la bague 18.

On peut alors réaliser le verrouillage rapide du tube-guide, en introduisant une partie d'extrémité d'un outil dans l'ouverture évasée 11'd de la plaque adaptatrice et dans les créneaux 18c de la bague 18.

On peut alors faire tourner la bague 18 à l'intérieur de l'ouverture 11' et autour du manchon 16 dont la surface cylindrique 16c présente un diamètre légèrement inférieur au diamètre intérieur des butées d'appui 18d de la bague 18. On fait tourner la bague 18 de 45°, de manière à faire passer les bossettes à déformation élastique 18b, d'un jeu de quatre cavités 11'f de l'ouverture 11' disposées à 90° au second jeu d'ouvertures. Du fait de leur élasticité, les bossettes 18b peuvent sortir des cavités puis venir s'engager dans les cavités suivantes pour réaliser le blocage par encliquetage de la bague 18 dans sa position de verrouillage.

Dans la position de verrouillage de la bague 18 obtenue par rotation de 45° à partir de la position représentée sur la figure 7, les butées d'appui 18d viennent se placer en face des passages axiaux 11'b. De cette façon, le manchon d'appui 16 dont les rebords d'appui 16h des butées 16e se trouvent au-dessus de la face 18h d'une butée d'appui 18d de la bague 18 reposant elle-même sur les butées d'appui 11'a de l'ouverture 11', se trouve bloqué et verrouillé dans la direction axiale par rapport à la plaque adaptatrice 10'. On réalise l'engagement simultané dans la plaque adaptatrice de l'ensemble des tubes-guides de l'assemblage qui sont ensuite fixés et verrouillés par l'intermédiaire des bagues 18.

Pour réaliser le démontage de l'embout 5' comportant la plaque adaptatrice 10', on fait tourner la bague 18 de verrouillage de chacun des tubes-guides de manière à faire passer les bossettes élastiques d'un jeu de cavités de l'ouverture de la plaque adaptatrice à un autre. Les butées d'appui 18d reviennent alors dans la position représentée sur la figure 7 dans laquelle les passages axiaux 11'b et 18e disposés dans le prolongement l'un de l'autre se trouvent également dans le prolongement d'une butée d'appui 16e du manchon 16.

Les quatre butées d'appui de chacun des tubes-guides se trouvant dans l'alignement des passages axiaux, on peut séparer l'embout des tubes-guides par soulèvement de cet embout dans la direction axiale des tubes-guides.

Les moyens de fixation des tubes-guides représentés sur les figures 5, 6 et 7 permettent donc de réaliser de manière très simple et très rapide la fixation ou le démontage de l'embout. Les moyens de fixation sont de plus disposés à l'intérieur de l'ouverture 11' et ne comportent aucune partie en saillie au-dessus de l'embout. Le tube-guide est affleurant sur la face supérieure de l'embout ou légèrement en retrait dans l'ouverture.

Sur la figure 8, on voit une bague 28 des moyens de fixation démontable d'un assemblage combustible selon le premier mode de réalisation et selon une variante.

La bague 28 qui effectue la même fonction que la bague 18 représentée sur les figures 5, 6 et 7 est réalisée à partir de deux éléments 26 et 27 qui sont assemblés avant qu'on introduise la bague 28 dans une ouverture de l'embout de l'assemblage combustible.

Le premier élément 26 ou corps de bague 28 est réalisé sous la forme d'une pièce de forme générale tubulaire qui comporte différentes parties fonctionnelles usinées sur sa surface externe et dans son alésage interne.

Le second élément 27 est un anneau élastique ouvert réalisé par enroulement et pliage d'une tige ou d'un fil à section circulaire ou carrée en acier ayant une bonne élasticité.

Le corps 26 de la bague 28 est usiné de manière à présenter dans sa partie inférieure, deux secteurs tels que 26a séparés l'un de l'autre par deux échancrures 26b et 26'b découpées dans la paroi du corps tubulaire. La partie interne des secteurs tels que 26a est en saillie radiale par rapport à la surface interne du corps tubulaire 26, de manière à constituer deux butées d'appui telles que 29 ayant une fonction analogue à celle des butées 18d décrites plus haut et délimitent entre elles, au niveau des échancrures 26b et 26'b, deux passages axiaux.

Une gorge torique 30 est formée sur la partie externe du corps 26, de manière à recevoir l'anneau élastique 27 qui peut être engagé sur le corps 26 en subissant une expansion diamétrale et fixé par encliquetage dans la gorge 30. De manière à assurer le blocage en rotation de l'anneau 27 sur le corps 26, une extrémité 27a de l'anneau 27 pliée vers l'intérieur est engagée dans un trou 30a de direction radiale débouchant dans la gorge 30.

De plus, le corps de bague 26 comporte à sa partie supérieure, au-dessus de la gorge 30, deux ensembles 32 et 32' de deux ergots usinés en saillie radiale par rapport à la surface courante externe du corps de bague 26.

Les deux ensembles d'ergots 32 et 32' disposés à 180° l'un de l'autre autour de l'axe de la bague 28 permettent d'assurer la retenue axiale de la bague à l'intérieur de l'embout dans sa position déverrouillée.

L'anneau élastique 27 est plié dans deux zones situées à 180° l'une de l'autre autour de l'axe de l'anneau pour constituer deux ergots de blocage 27b et 27'b. Lorsque l'anneau élastique 27 est fixé sur le corps de bague 26, comme représenté sur la figure 8, les ergots 27b et 27'b sont en saillie radiale vers l'extérieur par rapport à la surface extérieure du corps 26 et de la gorge 30 et placés dans des positions parfaitement définies à la périphérie de la bague 28.

Le corps 26 de la bague 28 présente en outre dans sa partie périphérique, à son extrémité supérieure, deux encoches 33 et 33' destinées à assurer le repérage de l'orientation de la bague 28, lors de son introduction dans ses positions de service, à l'intérieur de l'ouverture 31 d'un embout 34 d'assemblage combustible, représentée sur la figure 9.

Sur les bords de l'ouverture 31 (figure 9) sont prévues deux encoches 35 et 35' venant en coincidence avec les encoches 33 et 33' de la bague 28, dans la position de verrouillage de la bague.

Le corps 26 de la bague 28 comporte dans sa partie supérieure quatre secteurs en saillie vers l'intérieur disposés à 90° l'un de l'autre et séparés par des créneaux 36 dans lesquels on peut engager des branches d'un outil permettant de faire tourner la bague 28 autour de son axe après sa mise en place dans l'ouverture 31.

L'ouverture 31 (figure 9) est usinée de manière à présenter deux butées internes 37 et 37' en saillie radiale vers l'intérieur de l'ouverture 31 et séparées l'une de l'autre par deux passages axiaux tels que 38.

Les butées 37 et 37' sont usinées sur une partie seulement de la longueur de l'ouverture 31, de manière à présenter des surfaces d'appui perpendiculaires à l'axe de l'ouverture 31, à l'intérieur de l'ouverture. Les butées 37 et 37' et les passages axiaux 38 qui ont une position analogue à celle des butées 11'a et des passages axiaux 11'b représentés sur la figure 6 ont une étendue angulaire dans la direction circonférentielle analogue à celle des butées 29 de la bague 28 et des passages axiaux entre ceux butées.

La partie supérieure de l'ouverture 31 est évasée vers l'extérieur sous la forme d'une surface tronconique 39 permettant l'introduction et le débattement de l'outil d'actionnement de la bague 28 après son introduction dans l'ouverture 31.

Deux encoches 40 et 40' sont usinées dans la partie supérieure de l'ouverture 31 dans des dispositions à 180° autour de l'axe de l'ouverture 31.

Deux encoches telles que 41 sont également usinées dans la partie supérieure tronconique 39 de l'ouverture 31, dans des dispositions à 180° et à 90° des encoches 40 et 40'.

Les encoches 40 et 40' sont disposées de manière à recevoir les ergots 27b et 27'b de l'anneau 27 dans la position de verrouillage de la bague 28. Dans cette position, les butées 29 de la bague viennent recouvrir les passages axiaux 38 de l'ouverture 31.

La bague 28 peut être engagée axialement dans l'ouverture 31 dans son orientation correspondant à la position de verrouillage repérée par mise en coincidence des encoches 33 et 33' de la bague 28 avec les encoches correspondantes 35 et 35' de l'ouverture 31. Les ensembles d'ergots 32 et 32' de la bague 28 sont alors en vis-à-vis de deux encoches 42 de l'ouverture 31 et les ergots de blocage 27b et 27'b en vis-à-vis des encoches 40 et 40'. On peut alors introduire la bague 28 sans difficulté dans l'ouverture 31.

Dans cette position, la bague 28 dont les butées 29 obturent les passages axiaux 38 de l'ouverture 31 peut assurer le verrouillage d'un tube-guide tel que le tube-guide 4' représenté sur les figures 5, 6 et 7 équipé d'un manchon d'appui tel que le manchon 16. Les dimensions dans la direction axiale des butées 29 et 37, 37' sont telles que la somme de ces dimensions est sensiblement égale ou légèrement inférieure à la distance axiale entre les bords d'appui 16f et 16h du manchon 16 sur l'embout et sur les butées de la bague 28, respectivement.

La bague 28, dans sa position de verrouillage à l'intérieur de l'ouverture 31, dans laquelle les butées 29 viennent en appui sur les butées 37 et 37' de l'ouverture, assure donc la fixation du tube-guide 4' sur l'embout de l'assemblage.

Pour effectuer le déverrouillage de la liaison du tube-guide, on fait tourner la bague 28 de 90° à l'intérieur de l'ouverture 31, en utilisant un outil comportant des branches venant se loger dans les créneaux 36 de la bague, à l'intérieur de la partie tronconique 39 de l'ouverture 31.

Les ergots 27b et 27'b de l'anneau élastique 27 peuvent se rétracter diamétralement par déformation de l'anneau au début de la rotation et sortir des encoches 40 et 40'.

Après une rotation de 90° de l'anneau, les ergots 27b et 27'b parviennent au niveau des encoches 41 et viennent s'encliqueter dans les encoches 41 du fait de l'élasticité de l'anneau. La bague 28 est alors maintenue dans une position de déverrouillage dans laquelle les passages axiaux de la bague 28 entre les butées 29 sont sont alignés avec les passages axiaux 38 de l'ouverture 31. Le tube-guide n'est plus maintenu à l'intérieur de l'ouverture 31 de l'embout.

Cependant, la bague 28 reste maintenue axialement à l'intérieur de l'ouverture 31 par les ensembles d'ergots 32 et 32' introduits dans une gorge 43 usinée à l'intérieur de l'ouverture 31 en-dessous des cavités 43.

Il est également possible d'utiliser une bague ne comportant pas d'ergots de blocage tels que 32 et 32' et de prévoir des ouvertures d'indexage 40, 40' présentant une partie d'engagement inclinée vers l'extérieur. La bague est engagée en force dans les ouvertures 40 et 40'. Dans la position de déverrouillage la bague est retenue par le rebord de la gorge 43, les ouvertures 41 ne comportant pas de partie débouchant vers l'extérieur.

Sur les figures 10, 11 et 12, on a représenté un second mode de réalisation des moyens de fixation de l'extrémité d'un tube-guide 4" à l'intérieur d'une ouverture 11" traversant la plaque adaptatrice 10" d'un embout démontable 5" d'un assemblage combustible suivant l'invention.

Sur la figure 10, les moyens de fixation ont été représentés dans leur position assemblée, le tube-guide étant engagé et verrouillé à l'intérieur de l'ouverture 11" de la plaque adaptatrice de l'embout.

Sur la figure 11, les moyens de fixation ont été représentés dans un état non assemblé et dans des positions permettant leur engagement mutuel et leur montage.

Sur la figure 12, les moyens de fixation ont été représentés à l'état assemblé, le tube-guide n'étant pas engagé à l'intérieur d'une ouverture de la plaque adaptatrice.

Les éléments de fixation comportent un manchon d'appui désigné dans son ensemble par le repère 19 et constitué de deux pièces 20 et 21 et une bague 22.

Les deux parties 20 et 21 du manchon 19 sont engagées l'une sur l'autre et assemblées par une soudure 26 après engagement et montage de la bague 22 sur la partie 21 du manchon d'appui.

La réalisation du manchon d'appui 19 en deux parties permet de réaliser le montage de la bague 22 qui est montée prisonnière et rotative sur le manchon d'appui.

Après assemblage du manchon d'appui 19 et de la bague 22, le manchon d'appui 19 est engagé sur l'extrémité du tube-guide 4" et fixé sur celui-ci par une soudure.

Le moyen de fixation du tube-guide comporte également l'ouverture 11" traversant la plaque adaptatrice 10" qui est usinée pour coopérer avec la bague 22 et le manchon d'appui 19.

La partie 20 du manchon d'appui est réalisée sous la forme d'une pièce annulaire comportant un alésage interne cylindrique 20a et une collerette en saillie vers l'extérieur 20b comportant une surface d'appui 20c perpendiculaire à l'axe de la pièce 20 et quatre embrèvements périphériques 20d pour assurer le passage de quatre crayons combustibles 25, lors de leur extraction ou lors de leur introduction dans l'assemblage combustible, comme représenté sur la figure 13.

La pièce 21 du manchon d'appui 19 comporte une virole cylindrique 21c dont le diamètre extérieur est légèrement inférieur au diamètre intérieur de la virole cylindrique 20a de la pièce 20.

Comme il est visible en particulier sur les figures 11 et 11A, la virole 21c de la pièce 21 est traversée par des ouvertures oblongues de direction axiale 21a et 21b, les ouvertures 21a étant disposées en vis-à-vis suivant un diamètre de la virole 21c et les ouvertures 21b étant disposées en vis-à-vis suivant un second diamètre de la virole 21c faisant un angle de 45° avec le diamètre suivant lequel les ouvertures 21a sont alignées.

La pièce 21 du manchon d'appui 19 comporte une partie supérieure 21d dont l'épaisseur est supérieure à l'épaisseur de la virole 21c.

Le rebord inférieur de la partie 21d de forme annulaire constitue un rebord d'appui annulaire 21e.

Comme il est visible sur la figure 10, l'ouverture 11" traversant la plaque adaptatrice 10" est usinée pour constituer quatre butées d'appui 11"a disposées à 90° les unes des autres autour de l'axe de l'ouverture 11" séparées par des passages 11"b de direction axiale.

La bague 22 comporte une partie inférieure 22a constituée par une virole de forme cylindrique dont la paroi est déformée suivant deux zones opposées diamétralement pour constituer deux parties déformables élastiquement 22b de direction radiale dirigées vers l'intérieur de la virole 22a.

Dans sa partie supérieure, la bague 22 comporte quatre butées d'appui 22c disposées à 90° les unes des autres et séparées par des passages 22d suivant la direction axiale de la surface latérale externe de la virole de la bague 22.

La largeur dans la direction circonférentielle des butées d'appui 22c correspond sensiblement à la largeur des passages 11"b de l'ouverture 11" et la largeur des passages axiaux 22d dans la direction circonférentielle correspond sensiblement à la largeur dans la direction circonférentielle des butées 11"a de l'ouverture 11".

De cette manière, comme il sera expliqué plus loin, l'ensemble constitué par le manchon d'appui 19 et la bague 22 fixés sur la partie d'extrémité du tube-guide 4", comme représenté sur la figure 12, est susceptible d'être engagé dans la direction axiale à l'intérieur de l'ouverture 11".

L'alésage interne de la bague 22 comporte deux parties successives ayant des diamètres différents, la partie supérieure de l'alésage ayant un diamètre supérieur au diamètre de la partie inférieure de l'alésage. Entre ces deux parties à diamètre différent de l'alésage intérieur de la bague 22, est prévu un rebord 22e dont la forme correspond à la forme du rebord 21e de la pièce 21 du manchon d'appui.

Les pièces 20, 21 et 22 représentées sur la figure 11 sont assemblées et fixées à l'extrémité du tube 4" de la manière représentée sur la figure 12.

Dans un premier temps, on engage la bague 22, par son alésage interne, sur la pièce 21 par la partie inférieure de la virole 21c. Le rebord 22e de l'alésage interne de la bague 22 vient en contact avec le rebord de forme correspondante 21e de la pièce 21.

On engage la virole 21c de la pièce 21 dans l'alésage de la virole 20a, sur toute la longueur de la virole 20a. La partie inférieure de la virole 22a de la bague 22 vient reposer sur l'extrémité de la virole 20a de la pièce 20.

On réalise la fixation par une soudure 26, de la pièce 20 et de la pièce 21 du manchon d'appui 19.

On engage l'extrémité du tube-guide 4" à l'intérieur de la pièce 21, sur toute la longueur de la pièce 21 et on réalise une soudure de liaison entre la pièce 21 du manchon d'appui et la partie d'extrémité du tube-guide 4".

La partie d'extrémité du tube 4", le manchon d'appui 19 et la bague 22 sont alors dans leur position d'assemblage représentée sur la figure 12.

Les parties déformables élastiquement 22b de la bague 22 sont engagées dans les lumières 21a du manchon d'appui 19. La bague 22 est ainsi maintenue sur le manchon d'appui 19, dans une position définie en orientation.

Dans cette position, la plaque adaptatrice 10" de l'embout démontable 5" peut être engagée sur l'extrémité du tube-guide 4", de manière que les butées d'appui 22c se déplacent par glissement à l'intérieur des passages de direction axiale 11"b de l'ouverture 11" de la plaque adaptatrice.

Simultanément, les butées d'appui 11"a de l'ouverture 11" de la plaque adaptatrice se déplacent par glissement à l'intérieur des passages axiaux 22d de la bague 22 maintenue dans une orientation fixe à l'extrémité du tube 4".

La plaque adaptatrice 10" est engagée sur le tube 4" jusqu'au moment où le rebord d'appui 20c de la pièce 20 du manchon d'appui 19 vient en contact avec les parties inférieures des butées 11'a, à la partie périphérique de l'ouverture 11" de la plaque adaptatrice.

La distance dans la direction axiale entre le rebord 20c et le rebord inférieur des butées d'appui 22c de la bague 22 est telle que dans cette position, les rebords d'appui inférieurs des butées 22c se trouvent au-dessus des rebords supérieurs des butées d'appui 11"a de l'ouverture 11".

On fait alors tourner la bague 22 par l'intermédiaire d'un outil comportant des parties d'actionnement qui sont engagées par le dessus de la plaque adaptatrice 10", entre les butées d'appui 22c de la bague 22, à l'intérieur de la partie supérieure de l'ouverture 11", jusqu'au moment où les parties déformables élastiquement 22b de la bague 22 sont passées des lumières 21a aux lumières 21b de la virole 21c de la pièce 21 du manchon.

La bague 22 est montée prisonnière entre les pièces 20 et 21 du manchon d'appui 19 et libre en rotation autour de la pièce 21, en particulier par l'intermédiaire de son rebord d'appui 22e venant s'engager sur le rebord externe 21e de la pièce 21.

Lorsque les parties déformables élastiquement 22b sont venues s'engager dans les lumières 21b de la pièce 21 du manchon, la bague 22 est indexée en position de verrouillage du tube-guide, le rebord d'appui inférieur des butées 22c se trouvant à l'aplomb des rebords supérieurs des butées d'appui 11"a dans l'ouverture 11" de la plaque adaptatrice 10".

On réalise simultanément l'engagement d'un ensemble d'ouvertures de la plaque adaptatrice 10" sur l'ensemble des tubes-guides de l'assemblage. On réalise ensuite successivement le verrouillage de la partie d'extrémité de chacun des tubes-guides 4" sur la plaque adaptatrice 10".

Pour réaliser le déverrouillage de chacun des tubes de l'assemblage, on utilise l'outil permettant de faire tourner la bague 22 de chacun des ensembles de fixation des tubes-guides pour placer cette bague dans une position de déverrouillage, dans laquelle les parties déformables élastiquement 22b viennent s'engager dans les ouvertures 21a du manchon.

Les butées 22c de la bague 22 se trouvent alors dans l'alignement des passages axiaux 11"b entre les butées d'appui 11"a de l'ouverture 11" de la plaque adaptatrice.

Lorsqu'on a réalisé le déverrouillage de l'ensemble des tubes-guides de l'assemblage, la séparation de l'embout supérieur démontable des extrémités des tubes-guides est réalisé par levage de l'embout dans la direction axiale de l'assemblage.

Les assemblages combustibles suivant l'invention comportent donc des moyens rapides pour réaliser le verrouillage ou le déverrouillage des liaisons des tubes-guides et de la plaque adaptatrice d'un embout démontable. En outre, les moyens de fixation du tube-guide sont disposés entièrement à l'intérieur de l'ouverture de l'embout.

Dans le cas du premier mode de réalisation représenté sur les figures 5 à 7 et de sa variante représentée sur les figures 8 et 9, la bague de verrouillage et de déverrouillage reste fixée à l'intérieur de la plaque adaptatrice de l'assemblage combustible et les efforts sont transmis entre chacun des tubes-guides et l'embout de l'assemblage par l'intermédiaire des butées d'appui du manchon et des butées d'appui de la bague qui viennent reposer sur les butées d'appui de l'ouverture de la plaque adaptatrice.

Dans le cas du second mode de réalisation représenté sur les figures 10, 11 et 12, la bague de verrouillage et de déverrouillage reste fixée sur le manchon d'appui du tube-guide et les efforts s'exerçant entre le tube-guide et la plaque adaptatrice sont transmis par l'intermédiaire de la bague dont les portées d'appui viennent en contact avec les portées d'appui de la plaque adaptatrice.

Dans tous les cas, les moyens de fixation du tube-guide sont disposés entièrement à l'intérieur de l'embout et l'extrémité du tube-guide est affleurante ou légèrement en retrait par rapport à la face externe de l'embout.

En outre, on ne produit aucun déchet radio-actif, au moment du démontage de la fixation, contrairement au cas des assemblages combustibles comportant un tube fixé dans l'embout par un manchon de blocage qui doit être déformé au moment du démontage et qui n'est pas récupéré. Les manchons de blocage constituent, après démontage de l'assemblage, des déchets qu'il convient d'éliminer ; l'élimination des déchets radio-actifs demande des précautions et entraîne des coûts d'exploitation supplémentaires du réacteur nucléaire.

L'invention ne se limite pas aux modes de réalisation qui ont été décrits.

Bien qu'on ait décrit un assemblage démontable comportant des tubes-guides, l'invention s'applique également au cas des assemblages de combustible nucléaire comportant des tirants pleins fixés de manière démontable sur des embouts à leurs extrémités.

On peut imaginer l'utilisation de manchons d'appui, de bagues de verrouillage et d'ouvertures de traversée de la plaque adaptatrice de l'assemblage ayant une forme différente des formes qui ont été décrites.

En particulier, la bague et l'ouverture de la plaque adaptatrice peuvent comporter un nombre différent de butées d'appui ayant des formes différentes de celles qui ont été décrites. La bague peut comporter une ou plusieurs bossettes ou un ou plusieurs ergots pour assurer son blocage dans l'ouverture de l'embout ou sur le manchon d'appui.

Le manchon d'appui du tube-guide peut être réalisé en une ou en plusieurs pièces avec ou sans butée d'appui et avec ou sans cavité de blocage de la bague dans ses positions de verrouillage et de déverrouillage. Les parties de la bague à déformation élastique destinées à venir se loger dans des cavités de l'ouverture de la plaque adaptatrice ou du manchon peuvent avoir des formes différentes de celles qui ont été décrites.

De manière générale, l'invention s'applique dans le cas de tout assemblage de combustible pour réacteurs nucléaires refroidis par de l'eau légère comportant un embout démontable.

## Revendications

1. Assemblage combustible démontable d'un réacteur nucléaire refroidi par de l'eau légère comportant un faisceau de crayons combustibles (2) parallèles maintenus dans une ossature (9) formée par des tubes-guides (4, 4', 4") ou des tirants pleins, des entretoises (3) et des embouts d'extrémité (5, 6) fixés sur les extrémités des tubes-guides ou tirants (4), l'un au moins des embouts (5) étant fixé sur l'une des extrémités de chacun des tubes-guides ou tirants (4, 4', 4"), de manière démontable, par l'intermédiaire d'une partie d'extrémité du tube-guide (4, 4', 4") qui est engagée dans une ouverture (11, 11', 11") traversant une plaque transversale (10, 10', 10") de l'embout appelée plaque adaptatrice et associée à des moyens de fixation démontables rapides du tube-guide (4, 4', 4") comportant un manchon d'appui (16, 19) solidaire de l'extrémité du tube-guide (4, 4', 4") comprenant au moins un rebord d'appui (16f, 20c) destiné à venir en contact avec une face de la plaque adaptatrice (10, 10', 10") à la périphérie de l'ouverture (11, 11', 11"), et une bague (18, 22, 28) montée dans une disposition coaxiale autour du manchon (16, 19), de manière à pouvoir être déplacée en rotation autour du manchon (16, 19) et comportant au moins deux butées d'appui (18d, 22c, 29) en saillie radiale séparées par au moins deux passages (18e, 22d) de direction axiale et au moins une partie (18b, 22b, 27) à déformation élastique dans la direction radiale, caractérisé par le fait que :
- l'ouverture (11, 11', 11", 31) de l'embout (5, 5', 5") présente au moins deux butées d'appui (11'a, 11"a) en saillie vers l'intérieur, séparées par au moins deux passages (11'b, 11"b) de direction axiale et comportant une surface d'appui des butées de la bague (18, 22, 28) perpendiculaire à l'axe de l'ouverture, à l'intérieur de l'ouverture,
- l'un au moins des deux éléments ouverture de l'embout (11, 11', 11") et manchon d'appui (16, 19) comportant des ouvertures radiales (11'f, 21a, 21b) de réception de la partie à déformation élastique (18b, 22b, 27b, 27'b) de la bague (18, 22, 28), pour le blocage de la bague (18, 22) en position de verrouillage du manchon (16, 19) à l'intérieur de l'ouverture (11, 11', 11") ou en position de déverrouillage,
- et le manchon d'appui (16), lorsqu'il ne comporte pas d'ouverture de réception (21a, 21b) pour le blocage de la bague (18, 22) comprenant au moins deux butées d'appui (16e) séparées par au moins deux passages de direction axiale (16'e).

2. Assemblage combustible suivant la revendication 1, caractérisé par le fait :
- que l'ouverture (11', 31) de la plaque adaptatrice (10', 34) comporte au moins deux cavités (11'f, 40, 40', 41) espacées l'une de l'autre suivant la direction circonférentielle de l'ouverture,
- que la bague (18, 28) comporte au moins un élément (18b, 27) déformable élastiquement présentant au moins une partie en saillie radiale vers l'extérieur (27b, 27'b) susceptible de venir se loger dans une cavité (11'f, 40, 40', 41) de l'ouverture (11', 31) et au moins une partie d'accrochage (18c, 36) accessible par une extrémité (11'd, 39) de l'ouverture (11', 31) de la plaque adaptatrice pour faire tourner la bague (18, 28) à l'intérieur de l'ouverture (11', 31) entre une position de déverrouillage dans laquelle les butées d'appui (18d, 29) et les passages axiaux (18e) de la bague (18, 28) sont dans le prolongement axial des butées (11'a, 37, 37') et des passages de direction axiale (11'b, 38) de l'ouverture (11', 31) respectivement et une position de verrouillage dans laquelle les butées d'appui (18d, 29) de la bague (18, 28) sont en vis-à-vis des passages axiaux (11'b, 38) de l'ouverture (11', 31),
- et que le manchon d'appui (16) solidaire de l'extrémité du tube-guide (4') comporte des butées (16e) en saillie radiale vers l'extérieur dont la largeur et la position dans la direction circonférentielle correspondent à la largeur et à la position dans la direction circonférentielle des passages de direction axiale (11'b, 38, 18e) de l'ouverture (11') et de la bague (18), dans leur position relative de déverrouillage.

3. Assemblage suivant la revendication 2, caractérisé par le fait que la bague (18) comporte une virole dans laquelle est formée au moins une bossette élastique (18b) en saillie radiale vers l'extérieur, destinée à venir se loger dans une cavité (11'f) de l'ouverture (11').

4. Assemblage suivant la revendication 2, caractérisé par le fait que la bague (28) comporte un corps de bague (26) de forme tubulaire, à l'intérieur duquel les butées d'appui (29) de la bague sont disposées en saillie radiale par rapport à la surface interne du corps de bague (26) et un anneau élastique (27) engagé autour du corps de bague (26) comportant au moins un ergot (27b, 27'b) constituant la partie en saillie radiale vers l'extérieur de la bague (28) déformable élastiquement et susceptible de venir se loger dans une cavité (40, 40', 41) de l'ouverture (31) de l'embout (34).

5. Assemblage suivant la revendication 4, caractérisé par le fait que l'anneau élastique (27) est engagé à l'intérieur d'une gorge (30) usinée dans la partie périphérique externe du corps de bague (26) et comporte une extrémité libre (27a) engagée dans un trou (30a) de direction radiale du corps de bague (26).

6. Assemblage suivant l'une quelconque des revendications 4 et 5, caractérisé par le fait que le corps de bague (26) comporte au moins deux ergots (32, 32') de maintien axial de la bague (28) à l'intérieur de l'ouverture (31) de l'embout (34) susceptibles d'être engagés dans une gorge (43) sur la surface interne du corps de bague (26) par l'intermédiaire de cavités (42) débouchant à une extrémité de l'ouverture (31), lorsque la bague (28) est dans sa position de verrouillage.

7. Assemblage de combustible suivant l'une quelconque des revendications 4 et 5, caractérisé par le fait que le maintien axial de la bague (28) à l'intérieur de l'ouverture (31) de l'embout (34) est assuré par au moins deux ergots (27b, 27'b) de l'anneau élastique (27).

8. Assemblage suivant l'une quelconque des revendications 2 à 7, caractérisé par le fait que chacune des butées d'appui (16e) du manchon d'appui (16) solidaire de l'extrémité du tube-guide (4') comporte un rebord (16h) dirigé vers le rebord d'appui (16f) du manchon (16) sur la surface inférieure de la plaque adaptatrice (10') dont la distance au rebord d'appui (16f) sur la surface inférieure de la plaque adaptatrice (10') dans la direction axiale du manchon (16) est supérieure à la somme des dimensions dans la direction axiale d'une butée d'appui (11'a, 37, 37') de l'ouverture (11', 31) de la plaque adaptatrice et d'une butée d'appui (18d, 29) de la bague (18, 28), la retenue dans la direction axiale du tube-guide (4') par rapport à la plaque adaptatrice (10'), par l'intermédiaire du manchon (16) étant assurée par l'intermédiaire des butées d'appui (16e) du manchon (16), des butées d'appui (18d, 29) de la bague (18, 28) et des butées d'appui (11'a, 37, 37') de l'ouverture (11', 31) de la plaque adaptatrice (10') venant en position d'appui successive l'une sur l'autre.

9. Assemblage combustible suivant l'une quelconque des revendications 2 à 8, caractérisé par le fait que le manchon d'appui (16) du tube-guide (4') comporte une surface cylindrique externe (16b) destinée à venir en contact avec un faible jeu contre une surface intérieure de forme cylindrique des butées d'appui (11'a, 37, 37') de l'ouverture (11', 31) de la plaque adaptatrice de l'embout pour réaliser le centrage du tube-guide (4') à l'intérieur de l'ouverture (11') de l'embout.

10. Assemblage combustible suivant l'une quelconque des revendications 2 à 9, caractérisé par le fait que l'ouverture (11', 31) de la plaque adaptatrice (10') comporte une partie (11'd, 39) de forme sensiblement tronconique évasée vers l'extérieur pour l'engagement d'un outil sur un élément de prise (18c, 36) de la bague (18, 28) pour assurer sa mise en rotation entre ses positions de verrouillage et de déverrouillage.

11. Assemblage combustible suivant la revendication 1, caractérisé par le fait que le manchon d'appui (19) est réalisé en deux parties et comporte :
- une première pièce (20) de forme annulaire comportant une virole (20a) et le rebord d'appui (20c) sur une surface de la plaque adaptatrice (10") à la périphérie de l'ouverture (11"),
- et une seconde pièce (21) comportant une virole cylindrique (21c) traversée par au moins une lumière (21a, 21b) et un rebord d'appui extérieur (21e) sur sa surface extérieure, la première pièce (20) et la seconde pièce (21) étant assemblées dans une disposition coaxiale après engagement de la bague (22) sur la virole (21c) de la seconde pièce (21) par soudure de la première pièce (20) et de la seconde pièce (21), la bague (22) comportant les butées d'appui (22c) sur les butées d'appui correspondantes (11"a) de l'ouverture (11") étant montée prisonnière et rotative autour de son axe sur le manchon d'appui (19) entre le rebord d'appui extérieur (21e) de la seconde pièce (21) et le rebord d'appui (20c) de la première pièce (20).

12. Assemblage combustible suivant la revendication 11, caractérisé par le fait que l'ouverture (11") de la plaque adaptatrice (10") et la bague (22) comportent chacune quatre butées d'appui (11"a, 22c) disposées à 90° l'une de l'autre autour de l'axe de l'ouverture (11") et de la bague (22), respectivement et que le manchon d'appui (19) du tube-guide (4") comporte deux paires de lumières (21a, 21b) diamétralement opposées et alignées suivant deux diamètres du manchon faisant un angle voisin de 45° et que la bague (22) comporte deux parties déformables élastiquement de direction radiale dans des dispositions opposées diamétralement.

13. Assemblage combustible suivant l'une quelconque des revendications 1 à 12, caractérisé par le fait que le manchon d'appui (16, 19) comporte une collerette (16a, 20b) sur laquelle sont usinés le rebord d'appui (16f, 20c) et un ensemble d'embrèvements (16d, 20d) pour le passage de crayons combustibles (25), lors de leur extraction ou de leur introduction dans l'assemblage combustible.

## Patentansprüche

1. Zerlegbare Brennstoffkassette eines Kernreaktors, der durch leichtes Wasser gekühlt wird, und die aufweist: ein Bündel paralleler Brennstäbe (2), die durch ein Gestell (9) festgehalten werden, das durch Führungsrohre (4, 4', 4") oder durch massive Stäbe gebildet wird, Streben (3) und Abschlußteile (5, 6), die an den Enden der Führungsrohre oder der Stäbe (4) befestigt sind, wobei mindestens einer der Abschlußteile (5) an einem der Enden jedes einzelnen der Führungsrohre oder Stäbe (4, 4', 4") in zerlegbarer Weise befestigt ist, mit Hilfe von einem Abschlußteil des Führungsrohrs (4, 4', 4"), das in eine durchgehende Öffnung (11, 11', 11") einer waagrechten Platte (10, 10', 10") des Abschlußteils eingeführt ist, die als Adapterplatte bezeichnet wird und mit schnell zerlegbaren Befestigungsmitteln des Führungsrohrs (4, 4', 4") verbunden ist, die sich zusammensetzen aus einer Haltemanschette (16, 19), die mit dem Ende des Führungsrohres (4, 4', 4") abschließt, das mindestens eine Haltekante (16f, 20c) aufweist und dazu bestimmt ist, an einer Seite der Adapterplatte (10, 10', 10") mit dem Rand der Öffnung (11, 11', 11") in Berührung zu kommen, und einem Ring (18, 22, 28), der in eine koaxiale Anordnung um die Manschette (16, 19) eingefaßt ist, so daß er um die Manschette (16, 19) gedreht werden kann und mindestens zwei radial überstehende Anschläge (18d, 22c, 29) aufweist, die durch mindestens zwei Durchführungen (18e, 22d) in axialer Richtung und mit mindestens einem in radialer Richtung elastisch verformbaren Element (18b, 22b, 27) getrennt werden,
dadurch **gekennzeichnet**, daß
- die Öffnung (11, 11', 11", 31) des Abschlußteils (5, 5', 5") mindestens zwei nach innen überstehende Anschläge (11'a, 11"a) aufweist, die durch mindestens zwei Durchführungen (11'b, 11"b) in axialer Richtung getrennt werden und wobei im Inneren der Öffnung die Anschläge des Ringes (18, 22, 28) eine Auflagefläche aufweisen, die senkrecht zur Öffnungsachse ist,
- mindestens einer der beiden Elemente, Öffnung des Abschlußteils (11, 11', 11") und die Haltemanschette (16, 19), für die Blockierung des Ringes (18, 22) in Verriegelungslage der Manschette (16, 19) im Inneren der Öffnung (11, 11', 11") oder in Entriegelungslage radiale Aufnahmeöffnungen (11'f, 21a, 21b) für das elastisch verformbare Element (18b, 22b, 27b, 27'b) des Ringes (18, 22, 28) aufweist,
- und die Haltemanschette (16), wenn sie keine Aufnahmeöffnung (21a, 21b) für die Blockierung des Ringes (18, 22) enthält, mindestens zwei Anschläge (16e) aufweist, die durch mindestens zwei Durchführungen in axialer Richtung (16'e) getrennt werden.

2. Brennstoffkassette nach Anspruch 1,
dadurch gekennzeichnet:
- daß die Öffnung (11', 31) der Adapterplatte (10', 34) mindestens zwei voneinander in regelmäßigem Abstand stehende Aussparungen (11'f, 40, 40', 41) aufweist, die auf dem Rand der Öffnung angeordnet sind,
- der Ring (18, 28) mindestens ein elastisch verformbares Element (18b, 27), das ein radial nach außen überstehendes Teil (27b, 27'b) aufweist, das imstande ist, in eine Aussparung (11'f, 40, 40', 41) der Öffnung (11', 31) zu ruhen, und mindestens ein Teil zum Einhängen (18c, 36) enthält, das von einem Ende (11'd, 39) der Öffnung (11', 31) der Adapterplatte erreichbar ist, um den Ring (18, 28) im Inneren der Öffnung (11', 31) in eine Entriegelungslage, in der sich die Stützanschläge (18d, 29) und die axialen Durchführungen (18e) des Ringes (18, 28) jeweils in axialer Verlängerung der Anschläge (11'a, 37, 37') und der Durchführungen in axialer Richtung (11'b, 38) der Öffnung (11', 31) befinden, und in eine Verriegelungslage zu drehen, in der sich die Stützanschläge (18d, 29) des Ringes (18, 28) gegenüber der axialen Durchführungen (11'b, 38) der Öffnung (11', 31) befinden,
- daß die Haltemanschette (16) mit dem Ende des Führungsrohrs (4') abschließt, und radial nach außen überstehende Anschläge (16e) enthält, deren Breite und deren Position auf dem Rand entsprechen der Breite und der Position auf dem Rand der axialen Durchführungen (11'b, 38, 18c) der Öffnung (11') und des Rings (18), in ihrer Entriegelungslage.

3. Zusammenbau nach Anspruch 2,
dadurch gekennzeichnet, daß
der Ring (18) einen Mantel enthält, in dem mindestens ein elastischer Höcker (18b) gebildet ist, der radial nach außen übersteht, dazu bestimmt ist, in eine Aussparung (11'f) der Öffnung (11') zu ruhen.

4. Zusammenbau nach Anspruch 2,
dadurch gekennzeichnet, daß
der Ring (28) sich aus einem rohrförmigen Ringkörper (26) zusammensetzt, wobei im Inneren davon die Anschläge (29) des Ringes radial überhängend angeordnet sind, die sich auf die innere Oberfläche des Ringkörpers (26) beziehen, und einem elastischen Element (27), das um den Ringkörper (26) herum eingelassen ist, der mindestens eine Nase (27b, 27'b) aufweist, die ein elastisch verformbares Element enthält, das vom elastisch verformbaren Ring (28) aus radial nach außen übersteht, und imstande ist, in eine Aussparung (40, 40', 41) der Öffnung (31) des Abschlußteils (34) zu ruhen.

5. Zusammenbau nach Anspruch 4,
dadurch gekennzeichnet, daß
das elastische Element (27) im Inneren einer Nut (30) eingelassen ist, das in den äußeren Umfang des Ringkörpers (26) eingearbeitet ist und ein freies Ende (27a) enthält, das in ein Loch (30a) eingelassen ist, das in radialer Richtung des Ringkörpers (26) zeigt.

6. Zusammenbau nach einem der Ansprüche 4 und 5,
dadurch gekennzeichnet, daß
der Ringkörper (26) mindestens zwei Vorsprünge (32, 32') enthält, die das axiale Festhalten des Ringes (28) im Inneren der Öffnung (31) des Abschlußteils (34) gewährleisten, wobei sie in eine Nut (43), die sich auf der inneren Oberfläche des Ringkörpers (26) befindet, mit Hilfe von Aussparungen (42) eingeschoben werden können, die in ein Ende der Öffnung (31) münden, wenn der Ring (28) in seiner Verriegelungslage ist.

7. Zusammenbau nach einem der Ansprüche 4 und 5,
dadurch gekennzeichnet, daß
das axiale Festhalten des Ringes (28) im Inneren der Öffnung (31) des Abschlußteils (34) durch mindestens zwei Vorsprünge (27b, 27'b) des elastischen Elements (27) gesichert ist.

8. Zusammenbau nach einem der Ansprüche 2 bis 7,
dadurch gekennzeichnet, daß
jede einzelne der Stützanschläge (16e) der Haltemanschette (16), die mit dem Ende des Führungsrohrs (4') verbunden ist, eine Kante (16h) enthält, die auf die Haltekante (16f) der Manschette (16) gerichtet ist und auf der unteren Oberfläche der Adapterplatte (10') ruht, wobei der Abstand zur Haltekante (16f), die auf der unteren Oberfläche der Adapterplatte (10') ruht, in axialer Richtung der Manschette (16) größer ist als die Summe der Ausdehnungen in axialer Richtung eines Stützanschlags (11'a, 37, 37') der Öffnung (11', 31) der Adapterplatte und eines Stützanschlags (18d, 29) des Rings (18, 28) ist, wobei die Befestigung in axialer Richtung des Führungsrohrs (4') an die Adapterplatte (10') gesichert ist mittels der Manschette (16), Stützanschlägen (16e) der Manschette (16), Stützanschlägen (18d, 29) des Rings (18, 28) und Stützanschlägen (11'a, 37, 37') der Öffnungen (11', 31) der Adapterplatte (10'), die in eine übereinandergestapelte Halteanordnung gelangen.

9. Brennstoffkassette nach einem der Ansprüche 2 bis 8,
dadurch gekennzeichnet, daß
die Haltemanschette (16) des Führungsrohrs (4') eine äußere Zylinderoberfläche (16b) enthält, die dazu bestimmt ist, mit geringem Spiel mit der zylinderförmigen inneren Oberfläche des Stützanschlags (11'a, 37, 37') der Öffnung (11', 31) der Adapterplatte des Abschlußteils, für die Verwirklichung der Zentrierung des Führungsrohrs (4') im Inneren der Öffnung (11') des Abschlußteils in Berührung zu treten.

10. Brennstoffkassette nach einem der Ansprüche 2 bis 9,
dadurch gekennzeichnet, daß
die Öffnung (11', 31) der Adapterplatte (10') eine im wesentlichen nach außen konisch erweitertes Teil für den Eingriff eines Werkzeuges in das Aufnahmeelement (18c, 36) des Ringes (18, 28) enthält, zur Sicherung seiner Drehung zwischen den Verriegelungs- und Entriegelungslagen.

11. Brennstoffkassette nach Anspruch 1,
dadurch gekennzeichnet, daß
die Haltemanschette (19) in zwei Teilen ausgeführt ist und aufweist:
- ein erstes ringförmiges Teil (20) eine Ummantelung (20a) und die Haltekante (20c) enthält, die auf der Fläche der Adapterplatte (10") am Rand der Öffnung (11") ruht,
- und ein zweites Teil (21) eine zylindrische Ummantelung (21c), die mindestens ein Schlitzloch (21a, 21b) aufweist, und eine äußere Haltekante (21e) auf seiner äußeren Fläche enthält, wobei das erste Teil (20) und das zweite Teil (21) eine koaxiale Anordnung bilden nach der Einpassung des Ringes (22) auf die Ummantelung (21c) des zweiten Teils (21), die durch Schweißen des ersten Teils (20) an das zweite Teil (21) verbunden werden und der Ring (22) Stützanschläge (22c) auf den entsprechenden Stützanschlägen (11"a) der Öffnung (11") enthält und eingepreßt ist und um seine Achse auf der Haltemanschette (19) zwischen der äußeren Haltekante (21e) des zweiten Teils (21) und der Haltekante (20c) des ersten Teils (20) drehbar ist.

12. Brennstoffkassette nach Anspruch 11,
dadurch gekennzeichnet, daß
die Öffnung (11") der Adapterplatte (10") und der Ring (22) jede für sich vier Stützanschläge (11"a, 22c) enthalten, die voneinander um jeweils 90° um die Öffnungsachse (11") und der Achse des Ringes (22) angeordnet sind, und daß die Haltemanschette (19) des Führungsrohrs (4") zwei Paar gegenüberliegende Schlitzlöcher (21a, 21b) enthält, die auf dem Rand der Manschette angeordnet sind, dessen zwei Durchmesser einen Winkel von 45° einschließen und daß der Ring (22) zwei in radialer Richtung elastisch verformbare Teile aufweist, die gegenüberliegend angeordnet sind.

13. Brennstoffkasssette nach einem der Ansprüche 1 bis 12,
dadurch gekennzeichnet, daß
die Haltemanschette (16, 19) einen Kragen (16a, 20b) aufweist, auf dem die Haltekante (16f, 20c) und eine Gruppe an Versätzen (16d, 20d) für den Durchgang der Brennstäbe (25) bei deren Aus- oder Einbau in die Brennstoffkassette eingearbeitet sind.

## Claims

1. Detachable fuel assembly of a light-water-cooled nuclear reactor, comprising a bundle of parallel fuel rods (2) held in a framework (9) formed by guide tubes (4, 4', 4") or solid tie-rods, spacers (3) and end pieces (5, 6) fixed to the ends of the guide tubes or tie-rods (4), at least one of the end pieces (5) being removably fixed to one end of each of the guide tubes or tie-rods (4, 4', 4") via an end part of the guide tube (4, 4', 4") which engages in an opening (11, 11', 11") passing through a transverse plate (10, 10', 10") of the end piece known as the adapter plate and associated with removable quick-acting fixing means for the guide tube (4, 4', 4") comprising a bearing sleeve (16, 19) which is secured to the end of the guide tube (4, 4', 4") comprising at least one bearing flange (16f, 20c) adapted to come into contact with one side of the adapter plate (10, 10', 10") on the periphery of the opening (11, 11', 11"), and a ring (18, 22, 28) mounted in a coaxial arrangement around the sleeve (16, 19), so as to be capable of rotating around the sleeve (16, 19) and comprising at least two radially projecting bearing abutments (18d, 22c, 29) separated by at least two axially directed passages (18e, 22d) and at least one part (18b, 22b, 27) which is resiliently conformable in the radial direction, characterised in that:
the opening (11, 11', 11", 31) of the end piece (5, 5', 5") has at least two inwardly projecting bearing abutments (11'a, 11"a), separated by at least two axially directed passages (11'b, 11"b) and comprising a bearing surface for the abutments of the ring (18, 22, 28) perpendicular to the axis of the opening and inside the opening,
at least one of the two elements consisting of the opening of the end piece (11, 11', 11") and the bearing sleeve (16, 19) comprises radial openings (11'f, 21a, 21b) for receiving the elastically deformable part (18b, 22b, 27b, 27'b) of the ring (18, 22, 28), in order to secure the ring (18, 22) in the locking position of the sleeve (16, 19) inside the opening (11, 11', 11") or in the unlocking position,
and the bearing sleeve (16), when it has no receiving opening (21a, 21b) for securing the ring (18, 22), comprises at least two bearing abutments (16e) separated by at least two axially directed passages (16'e).

2. Fuel assembly according to claim 1, characterised in that:
the opening (11', 31) in the adapter plate (10', 34) comprises at least two cavities (11'f, 40, 40', 41) spaced apart from one another in the circumferential direction of the opening,
the ring (18, 28) comprises at least one resiliently conformable element (18b, 27) having at least one part projecting radially outwards (27b, 27'b) which is capable of engaging in a cavity (11'f, 40, 40', 41) of the opening (11', 31) and at least one coupling part (18c, 36) accessible through one end (11'd, 39) of the opening (11', 31) in the adapter plate in order to rotate the ring (18, 28) inside the opening (11', 31) between an unlocking position in which the bearing abutments (18d, 29) and the axial passages (18e) of the ring (18, 28) are on an axial extension of the abutments (11'a, 37, 37') and axially directed passages (11'b, 38) of the opening (11', 31) respectively and a locking position in which the bearing abutments (18d, 29) of the ring (18, 28) are located opposite the axial passages (11'b, 38) of the opening (11', 31),
and the bearing sleeve (16) integral with the end of the guide tube (4') comprises abutments (16e) projecting radially outwards, whose width and position in the circumferential direction correspond to the width and position in the circumferential direction of the axially directed passages (11'b, 38, 18e) of the opening (11') and of the ring (18), in their relative unlocking positions.

3. Assembly according to claim 2, characterised in that the ring (18) comprises a collar in which is formed at least one resilient boss (18b) projecting radially outwards, adapted to engage in a cavity (11'f) of the opening (11').

4. Assembly according to claim 2, characterised in that the ring (28) comprises a tubular ring body (26) inside which the bearing abutments (29) of the ring are arranged so as to project radially relative to the inner surface of the ring body (26) and a resilient ring (27) engaging around the ring body (26) and having at least one lug (27b, 27'b) which forms the radially outwardly projecting part of the resiliently conformable ring (28) which is capable of engaging in a cavity (40, 40', 41) of the opening (31) of the end piece (34).

5. Assembly according to claim 4, characterised in that the resilient ring (27) engages in a groove (30) machined in the outer peripheral part of the ring body (26) and has a free end (27a) which engages in a radially directed hole (30a) in the ring body (26).

6. Assembly according to one of claims 4 and 5, characterised in that the ring body (26) comprises at least two lugs (32, 32') for axially holding the ring (28) inside the opening (31) in the end piece (34), said lugs being capable of engaging in a groove (43) on the inner surface of the ring body (26) via cavities (42) opening out at one end of the opening (31), when the ring (28) is in the locking position.

7. Fuel assembly according to one of claims 4 and 5, characterised in that the ring (28) is axially secured inside the opening (31) in the end piece (34) by at least two lugs (27b, 27'b) on the resilient ring (27).

8. Assembly according to any one of claims 2 to 7, characterised in that each of the bearing abutments (16e) of the bearing sleeve (16) integral with the end of the guide tube (4') has a flange (16h) directed towards the bearing flange (16f) of the sleeve (16) on the lower surface of the adapter plate (110'), whose spacing from the bearing flange (16f) on the lower surface of the adapter plate (10') in the axial direction of the sleeve (16) is greater than the sum of the dimensions in the axial direction of a bearing abutment (11'a, 37, 37') of the opening (11', 31) of the adapter plate and of a bearing abutment (18d, 29) of the ring (18, 28), the securing of the guide tube (4') in the axial direction relative to the adapter plate (10') via the sleeve (16) being provided by the bearing abutments (16e) of the sleeve (16), the bearing abutments (18d, 29) of the ring (18, 28) and the bearing abutments (11'a, 37, 37') of the opening (11', 31) of the adapter plate (10') successively coming to abut on one another.

9. Fuel assembly according to any one of claims 2 to 8, characterised in that the bearing sleeve (16) of the guide tube (4') comprises an outer cylindrical surface (16b) adapted to come into contact, with slight play, with a cylindrical inner surface of the bearing abutments (11'a, 37, 37') of the opening (11', 31) in the adapter plate of the end piece in order to centre the guide tube (4') inside the opening (11') in the end piece.

10. Fuel assembly according to any one of claims 2 to 9, characterised in that the opening (11', 31) in the adapter plate (10') comprises a substantially frustumshaped part (11'd, 39) flaring outwards for the engagement of a tool on a gripping means (18c, 36) on the ring (18, 28) to allow it to be rotated between its locked and unlocked positions.

11. Fuel assembly according to claim 1, characterised in that the bearing sleeve (19) is in two parts and comprises:
a first part (20), annular in shape, comprising a collar (20a) and the bearing flange (20c) on a surface of the adapter plate (10") on the periphery of the opening (11"),
and a second part (21) comprising a cylindrical collar (21c) through which there is at least one opening (21a, 21b) and which has an outer bearing flange (21e) on its outer surface, the first part (20) and the second part (21) being assembled in a coaxial arrangement, after the ring (22) has engaged on the collar (21c) of the second part (21), by welding the first part (20) and the second part (21) together, the ring (22) comprising the bearing abutments (22c) on the corresponding bearing abutments (11"a) of the opening (11") being captively mounted and rotatable about its axis on the bearing sleeve (19) between the outer bearing flange (21e) of the second part (21) and the bearing flange (20c) of the first part (20).

12. Fuel assembly according to claim 11, characterised in that the opening (11") in the adapter plate (10") and the ring (22) each have four bearing abutments (11"a, 22c) arranged at 90° to one another about the axis of the opening (11") and the ring (22) respectively, and the bearing sleeve (19) of the guide tube (4") has two diametrically opposed pairs of openings (21a, 21b) aligned along two diameters of the sleeve forming an angle of approximately 45°, and the ring (22) comprises two radially directed, resiliently conformable parts in diametrically opposite arrangements.

13. Fuel assembly according to any one of claims 1 to 12, characterised in that the bearing sleeve (16, 19) has a collar (16a, 20b) on which are machined the bearing flange (16f, 20c) and a set of recesses (16d, 20d) to allow for the movement of fuel rods (25) when they are being removed from or inserted in the fuel assembly.
